# EUROPEAN PATENT APPLICATION

(11) **EP 2 404 816 A2**
(43) Date of publication of application: **11.01.2012**
(21) Application number: 10748363.8
(22) Date of filing: 03.03.2010
(51) Int. Cl.: B62D 63/00

(54) **FOLDING TRAILER FOR TWO-WHEELED VEHICLES**

(30) Priority: 04.03.2009 ES 200900614
(71) Applicant: Pérez Istillarte, José Enrique, 33204 Gijón, Asturias (ES)
(72) Inventor: Pérez Istillarte, José Enrique, 33204 Gijón, Asturias (ES)
(74) Representative: Naranjo Marcos, Maria Antonia
(86) International application number: PCT/ES2010/000094
(87) International publication number: WO 2010/100301

(57) **Abstract**

The invention relates to a folding trailer for two-wheeled vehicles, which, when folded, forms a rectangular prism that can be easily stacked and stored and which is opened in order to be used and can transport a two-wheeled vehicle, said trailer including a built-in access ramp. The invention includes a system for locking the front wheel of the motorcycle, and no tools are required in order to fold/unfold the trailer. Moreover, the dimensions of the folded trailer are such that it can be transported in the boot of a motor vehicle.

## Description

### OBJECT OF THE INVENTION

The present invention consists of a folding trailer for two-wheeled vehicles and therefore falls in the field of automotive accessories.

### BRIEF DESCRIPTION OF THE INVENTION

It is a folding trailer which, when folded away, forms a rectangular prism that can be easily stacked and stored. It is opened in order to be used and can transport a two-wheeled vehicle with spare wheels, as well as the compulsory helmets, gloves, jackets, tools and other similar items for towing.

The dimensions of the folded trailer are such that it can be transported in the boot of a motor vehicle.

### STATE OF THE TECHNOLOGY

The applicant of the present invention is not aware of any similar trailers.

### ADVANTAGES

The advantages of the present invention can be seen in these specifications. However, the most important ones include, but are not limited to, the following:
- When folded away, the trailer is easy to stack and store and its dimensions mean that it can be easily transported in the boot of a car.
- It is fitted with wheels so that it can be moved around when folded away.
- When fully extended, the trailer can transport two-wheeled vehicles, in particular motorcycles, and it has a built-in ramp for loading and unloading motorcycles.
- No tools are required to fold/unfold the trailer.
- It has no loose parts.
- It has a system for locking the front wheel of the motorcycle.
- It is easy to manufacture.

### DESCRIPTION OF THE DRAWINGS

In order to complete the description provided and to provide a better understanding of this report, attached below are drawings which show one of the exemplary embodiments of the object of the invention, in which:

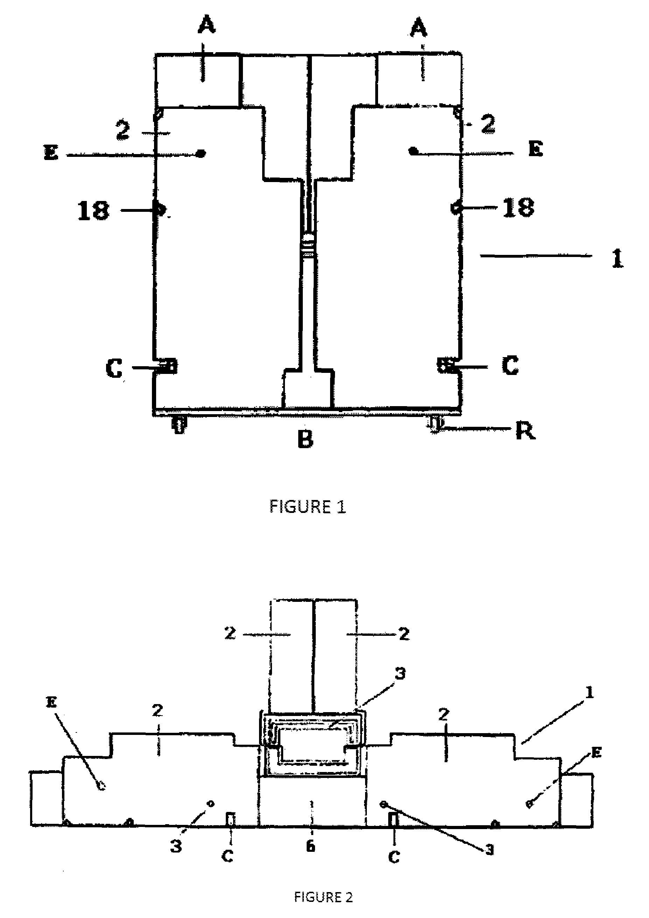

Fig. 1 shows the fully folded trailer with the detail of the lid lock and the bases of the luggage compartments.
Fig. 2 is a view of the first step to unfold the trailer, with the opening of the sides.

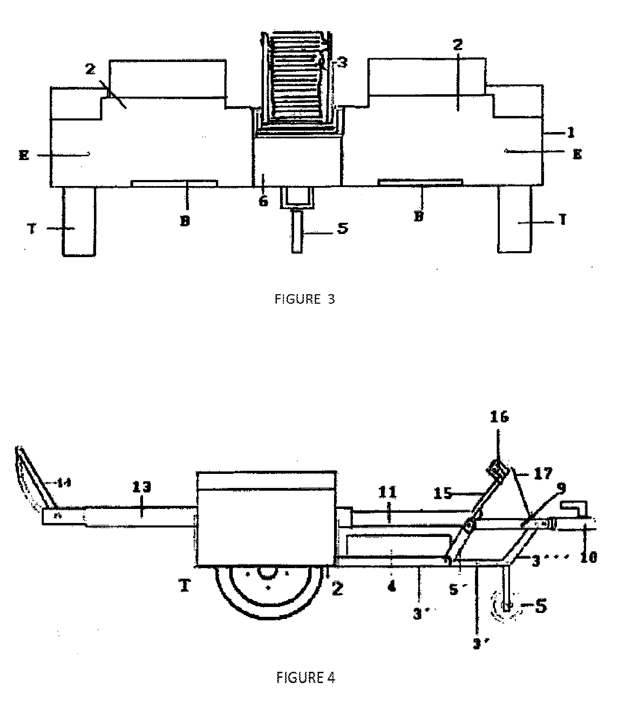

Fig. 3 is a rear view of the fully unfolded trailer.
Fig. 4 shows a side view of the unfolded trailer.

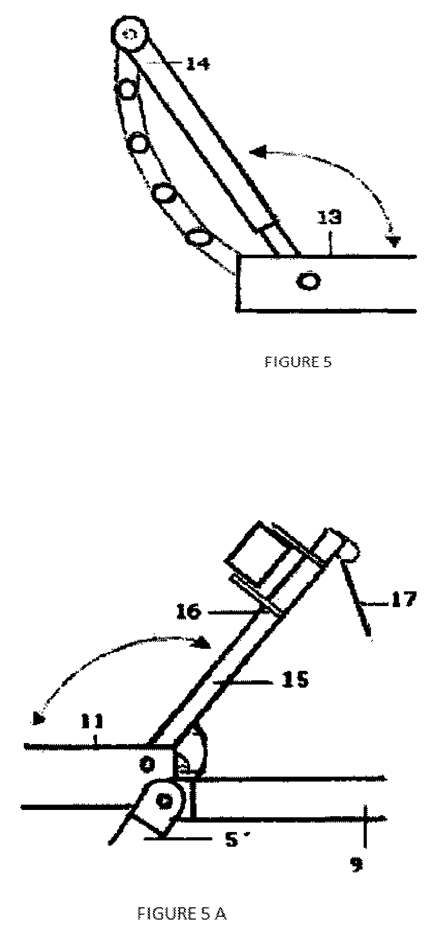

Fig. 5 is a side view of the access ramp for the motorcycle.
Fig. 5A is a side view of the front bracket of the motorcycle. This is a very important part because:
   - At the bottom it has two hooks on which, when it is rotated, the axle of the wishbone of the shafts is attached to the front platform, thus preventing movement and increasing the rigidity of the unit.
   - At the top it has a locking system for the front wheel of the motorcycle (any with a diameter of 110/250), which is secured unaided. This means that just one person can load and unload the motorcycle.

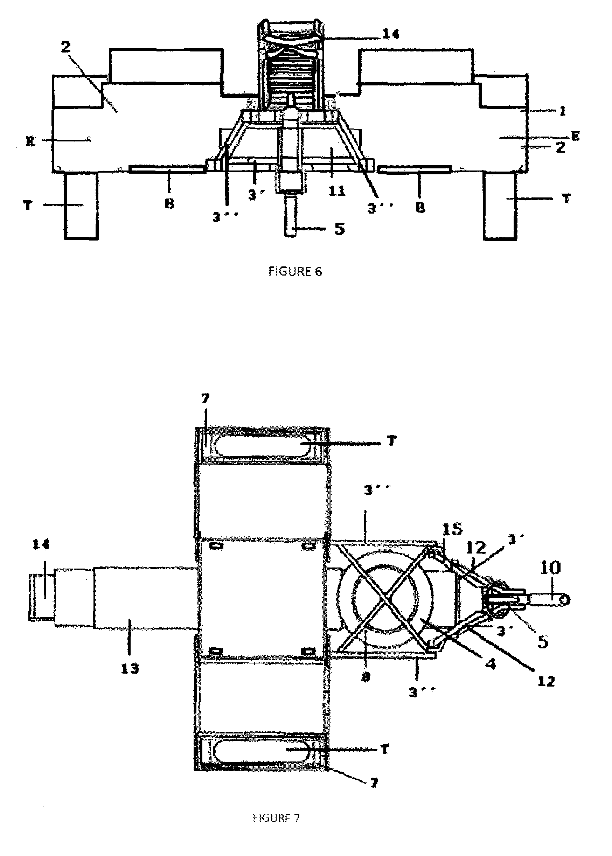

Fig. 6 is a front view of the trailer with the jockey wheel down.
Fig. 7 is an underside view of the bottom of the unfolded trailer

### DESCRIPTION OF A PREFERRED EMBODIMENT OF THE INVENTION

According to the attached designs, the present invention is made up of various parallelepiped bodies (1) similar to drawers which can be connected up to each other, and may thus form a parallelepiped with wheels (R).

The unit consists of metal sheets (2) which are situated peripherally both when it is folded and opened out. It also has wings (A) with axles (E) and locks (18)

The drawers (1) are opened out, one on each side of the centre and another (6) in the central part, forming the base for the luggage compartments (B). The lower luggage compartment is completely independent of the other two.

When the drawers are opened out, the lower conduit (C) must be correctly aligned in order to subsequently house the first shaft.

In the centre there is a folded metal chassis (3) which, strictly speaking, is the chassis of the trailer and is made up of plates (11 and 13). The plate (11) has brackets or shafts (3' and 3") on the sides, forming a square on which the central circle (8) sits, and, above it, the spare wheel (4) of the trailer. The third auxiliary wheel or jockey wheel (5) is connected to the front part.

Once the side wings (A) have been attached, the wheels of the trailer (T) come out of the lower window (7) of the wings. The peripheral windows are covered with the sheets (2) and the brackets or parallel shafts (3") are unfolded, as well as the plate (11), the triangle (12) formed by two brackets or shafts (3") and the central circle (8) situated on the plate (11) on which the spare wheel (4) will sit.

The jockey wheel (5) is situated on the lower and front vertex of the triangle, attached on one side to the axle between the 1 st and 2nd shaft (3" and 5") and on the other side to the axle between the 3rd shaft (3"') and the header (9), where the towbar (10) of the vehicle which transports the trailer is also situated.

The shaft is only embedded in the conduit (C) when the unit is unfolded.

The sections of the front plate (11) are laid out in the centre, situated underneath the front triangle (12), and the rest of the central catwalk (13) extends along the centre and inside the trailer towards the rear part, ending up at the ramp (14). The front catwalk comes out of the runner in the interior of the central catwalk up to its final position. The rear catwalk sits on the central catwalk and rotates on it.

The front part of the catwalk ends up in a hollow rectangle (15) the upper part of which ends up in a concave arc (16) where the front wheel of the motorcycle transported by the trailer can sit. The header has a safety strap (17) which joins it to the front drawbar of the trailer.

## Claims

1. Folding trailer for two-wheeled vehicles, **characterised by** being made up of several parallelepipeds (1) or drawers that can be connected to each other and which, when folded, form a parallelepiped with wheels (R). The unit consists of metal sheets (2) which are situated peripherally both when it is folded and opened out. It also has wings (A) with axles (E) and locks (18).
When the parallelepiped bodies move, the side wings (A) are fixed and the wheels of the trailer (T) come down through the lower window (7) of the wings. The peripheral windows are covered with the sheets (2). In the centre there is a folded metal chassis (3) which, strictly speaking, is the chassis of the trailer and is made up of the front (11) and rear (13) plates. The third auxiliary wheel or jockey wheel (5) is attached on one side to the axle between the 1 st and 2nd shaft or bracket (3" and 5") and on the other side to the axle between the 3rd shaft (3"') and the header (9) where the towbar (10) of the vehicle which transports the trailer is also situated.

2. Folding trailer for two-wheeled vehicles, in accordance with claim one, **characterised by** the fact that when the parallelepiped bodies move sideways they constitute the base of the luggage compartments (B).

3. Folding trailer for two-wheeled vehicles, in accordance with the above claims, **characterised by** the central sections of the front plate (11) being situated behind the front triangle (12) which ends up in a hollow rectangle (15) the upper part of which has a concave arc (16) to support the front wheel of the motorcycle being transported. The header has a safety strap (17). The rest of the central plate (13) extends along the centre and inside the trailer towards the rear part, ending up at the ramp (14).
